# FASCICULE DE BREVET EUROPEEN

(11) **EP 1 714 070 B1**
(45) Date de publication et mention de la délivrance du brevet: **05.03.2008**
(21) Numéro de dépôt: 05717524.2
(22) Date de dépôt: 01.02.2005
(51) Int. Cl.: F16L 55/165

(54) **PROCEDE DE REHABILITATION DE CANALISATIONS DE FLUIDE, NOTAMMENT D EAU POTABLE.**
VERFAHREN ZUM SANIEREN VON FLUIDROHREN, INSBESONDERE VON TRINKWASSER
METHOD FOR RESTORING FLUID PIPES, PARTICULARLY FOR DRINKING WATER

(30) Priorité: 13.02.2004 FR 0401478
(43) Date de publication de la demande: 25.10.2006
(73) Titulaire: Lyonnaise Des Eaux France, 75009 Paris (FR)
(72) Inventeur: BORDIGNON, Jacques, F-69004 Lyon (FR); FERRIER, Thierry, Casablanca, 20500 (MA); DARAS, Serge, F-75014 Paris (FR)
(74) Mandataire: Michardière, Bernard
(86) Numéro de dépôt international: PCT/FR2005/000208
(87) Numéro de publication internationale: WO 2005/088182

(56) Documents cités:
- WO-A-20/04011840
- DE-A- 4 139 565
- FR-A- 536 213

## Description

La présente invention concerne la réhabilitation de canalisations de grand diamètre, véhiculant un fluide tel que notamment de l'eau potable.

Dans la première moitié du XX^{è} siècle, on a réalisé des réseaux de distribution d'eau potable enterrés, constitués par l'assemblage bout à bout de conduites de grand diamètre en béton armé avec une âme en tôle. Ces conduites sont toujours en service, mais compte tenu de leur vétusté elles montrent des signes de faiblesse. Leur point faible se situe au niveau des joints entre deux conduites. A l'époque de la réalisation de tels réseaux; on ne savait pas souder sur chantier et la jonction des conduites se faisait par des joints à cordes goudronnées plombées sous une bague métallique. Ce joint vieillit au cours du temps alors que le reste de la conduite est en bon état. L'examen des conduites révèle la présence de fuites significatives, dues à l'affaiblissement dés joints avec le temps:

Afin d'éviter un renouvellement de ces conduites, peu envisageable car trop cher, la nécessité se fait sentir de procéder à la réfection de leurs joints et la présente invention se propose d'apporter un procédé de réhabilitation qui présente comme première caractéristique une intervention par l'intérieur desdites conduites, en vue de leur restituer l'étanchéité nécessaire. Le document DE-A-4 139 565 décrit la réfection de joints entre deux conduites.

Le procédé objet de la présente invention doit notamment apporter une solution aux problèmes techniques suivants :
- limiter au maximum les interventions sur les parties en béton,
- tenir compte du fait que les profils des conduites, en long et en travers, ont été chahutés au cours du temps, ce qui ne permet pas de réaliser un tubage en acier pour restituer l'étanchéité au droit des joints,
- tenir compte de la dilatation des conduites sous l'effet de variations de la température du fluide transporté.

Ces problèmes sont résolus par l'invention qui apporte un procédé de réhabilitation de canalisations de fluide, notamment d'eau potable, réalisées par raccordement bout à bout de conduites en béton armé comportant une âme en tôle mince et des manchettes de renfort à chacune de leurs extrémités, caractérisé en ce que cette réhabilitation consiste à effectuer par l'intérieur desdites conduites, une reprise des joints selon les étapes suivantes :
a) dégarnissage par l'intérieur des joints entre les conduites par démolition du béton existant jusqu'à l'âme en tôle de façon à mettre à nu cette âme en tôle respective desdites conduites ainsi que leurs manchettes de renfort, de part et d'autre du joint,
b) mise en place sur la partie des conduites ainsi mise à nu, d'un joint soudé réalisé sous la forme d'une manchette métallique venant recouvrir les renforts d'extrémité, les bords de ladite manchette étant ensuite soudés en continu sur l'âme en tôle des conduites.
c) mise en place de joints collés qui sont respectivement intercalés entre une pluralité de joints soudés, ces joints collés permettant de tenir compte de la dilation et étant réalisés sous la forme d'une bande de matériau souple et étanche venant ponter le joint et qui est collée à l'aide d'un mortier de scellement, selon un anneau de collage, sur l'âme en tôle des conduites de part et d'autre du joint de raccordement.
d) regarnissage des joints par application de ciment et d'une couche de mortier alimentaire de finition sur la partie interne du joint au contact du liquide véhiculé.

Selon un mode de mise en oeuvre préféré de l'invention on réalise un joint collé entre 8 à 12 joints soudés, de préférence entre 10 joints soudés.

Selon l'invention la manchette métallique constituant un joint soudé est réalisée de préférence sous la forme de deux demi cintres, dont la largeur est adaptée de façon à englober les deux manchettes de renfort d'extrémité des conduites au point de leur raccordement.

Selon l'invention la bande de pontage à partir de laquelle est réalisé ce joint collé est une bande textile plastifiée ou non. De préférence cette bande est un tissu de lin enduit de « Teflon » (polytetrafluoroéthylène).

D'autres caractéristiques et avantages de la présente invention ressortiront de la description faite ci-après en référence aux dessins annexés qui en illustrent un exemple de mise en oeuvre dépourvu de tout caractère limitatif. Sur les dessins :
La figure 1 est une vue en coupe axiale verticale d'un joint soudé et
La figure 2 est une vue similaire à la figure 1 représentant un joint collé.

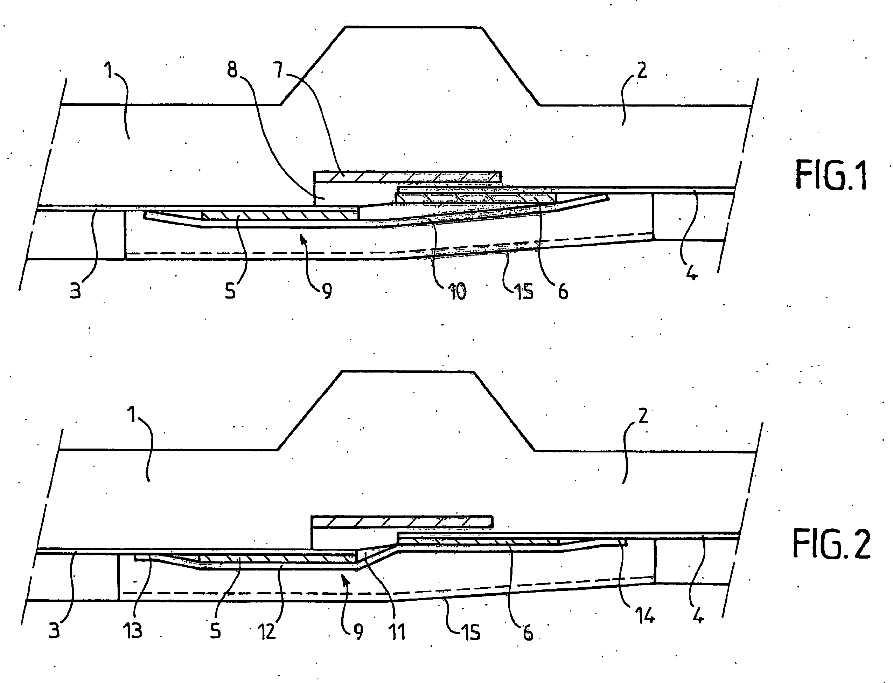

On se réfère aux dessins annexés sur lesquels on a représenté deux conduites, désignées dans leur ensemble par les références 1 et 2. Ces conduites sont en béton et elles comportent une âme en tôle respectivement 3 et 4. Elles sont renforcées à leurs extrémités respectives par des manchettes 5 et 6. Ainsi qu'on le voit sur le dessin, ces conduites sont raccordées bout à bout, l'étanchéité de la zone de raccordement ayant été assurée, lors de la réalisation de la canalisation dont font partie lesdites conduites, à l'aide d'un joint à cordes goudronnées et plombées 8 sous une bague métallique 7. Comme on le voit sur la figure 1, il se produit au cours du temps un désalignement des conduites au niveau de leur raccordement entraînant un affaiblissement du joint entre les deux conduites 1 et 2 ce qui se traduit par un défaut d'étanchéité à ce niveau.

Afin de réaliser la réhabilitation de ces conduites en rétablissant l'étanchéité dans leur zone de raccordement, l'invention apporte une solution qui consiste à souder et/ou à coller un joint par l'intérieur des conduites.

Le procédé selon l'invention, ainsi qu'on l'a mentionné ci-dessus comporte essentiellement les étapes suivantes :

### A) dégarnissage des joints existants

On réalise un découpage du béton existant dans une zone centrée sur le joint entre les deux conduites 1 et 2 jusqu'à l'âme en tôle 3 et 4 respectivement de chacune desdites conduites, de façon à mettre à nu ces âmes en tôle ainsi que les manchettes de renfort 5 et 6 situées de part et d'autre de la zone du joint.

Sur les figures 1 et 2 des dessins, la zone ainsi dégagée a été désignée par la référence 9. On procède ensuite à un meulage de la surface ainsi mise à nu.

### B) confection d'un joint soudé

On prépare préalablement une manchette métallique destinée à être soudée par l'intérieur des conduites sur la zone 9 du joint préalablement dégagée, cette manchette présentant une largeur adaptée de façon à englober les deux renforts d'extrémité 5 et 6. De préférence, cette manchette désignée sur la figure 1 par la référence 10 est réalisée sous la forme de deux demi cintres métalliques. La manchette est adaptée et mise en place par pointage par soudure et enfin ses bords sont soudés en continu sur les âmes en tôle 3 et 4 des deux conduites 1 et 2 ainsi qu'on le voit sur la figure 1.

On procède ensuite au regarnissage de la zone des joints, en mettant en place un mortier venant combler la zone 9 qui avait été dégarnie lors de la première étape du procédé, de façon à reconstituer la surface interne 15 de la canalisation. Dans la mesure où la canalisation à laquelle appartiennent les conduites 1 et 2 véhicule de l'eau potable, on applique sur la surface du joint ainsi refait un mortier de qualité alimentaire.

Afin de tenir compte de la dilatation de la canalisation résultant des variations de température du fluide transporté, l'invention prévoit d'intercaler entre un certain nombre de conduites raccordées à l'aide de joints soudés, comme décrit ci-dessus, des conduites qui sont raccordées à l'aide d'un joint collé. Selon l'invention, on prévoit un joint collé tous les huit à douze joints soudés, de préférence tous les dix joints soudés. Le procédé selon l'invention comporte donc l'étape supplémentaire ci-après :

### C) confection d'un joint collé

Cette étape est illustrée par la figure 2. On procède à un décapage des surfaces des tôles 3 et 4 et des manchettes de renfort 5 et 6 précédemment mises à nu et on met en place sur ces surfaces un fond de joint constitué par exemple par une résine. Si nécessaire on procède à un remplissage à l'aide d'un mortier 11 des zones dégagées entre les plans de raccordement des conduites 1 et 2. On met ensuite en place une bande de pontage 12 conçue et réalisée de façon à assurer l'étanchéité du joint. Cette bande 12 est une bande d'un matériau textile éventuellement plastifié et elle est de préférence constituée d'un tissu de lin enduit de polytétrafluoroéthylène (Téflon). On peut à cet égard utiliser le produit d'isolation et de compensation des dilatations commercialisé sous la marque déposée «DILATEC» par la Société Suisse HUBER et SUHNER AG.

Après mise en place, comme illustré sur la figure 2, la bande de pontage 12 est collée à l'aide d'un mortier de scellement, selon des anneaux de collage respectivement 13 et 14 sur les âmes en tôle 3 et 4.

On procède ensuite au regarnissage de la zone 9 comme décrit précédemment par application de ciment et d'une couche de mortier alimentaire de finition, de façon à reconstituer la surface interne 15 de la canalisation.

Il demeure bien entendu que la présente invention n'est pas limitée au mode de mise en oeuvre décrit ou représenté mais qu'elle en englobe toutes les variantes.

## Revendications

1. Procédé de réhabilitation de canalisations véhiculant un fluide, notamment de l'eau potable, réalisées par raccordement bout à bout de conduites en béton armé (1,2) comportant une âme en tôle mince (3,4) et des manchettes de renfort (5,6) à chacune de leurs extrémités, **caractérisé en ce que** cette réhabilitation consiste à effectuer par l'intérieur desdites conduites, une reprise des joints selon les étapes suivantes :
a) dégarnissage par l'intérieur des joints entre les conduites par démolition du béton existant jusqu'à l'âme en tôle (3,4) de chaque conduite de façon à mettre à nu cette âme en tôle ainsi que les manchettes de renfort de part et d'autre du joint,
b) mise en place, sur la partie des conduites ainsi mise à nu (9), d'un joint soudé réalisé sous la forme d'une manchette métallique (10) venant recouvrir les renforts d'extrémité (5,6), les bords de ladite manchette étant ensuite soudés en continu sur l'âme en tôle respective des conduites (3,4),
c) mise en place de joints collés qui sont respectivement intercalés entre une pluralité de joints soudés, ces joints collés permettant de tenir compte de la dilation et étant réalisés sous la forme d'une bande (12) d'un matériau souple et étanche venant ponter le joint et qui est collé à l'aide d'un mortier de scellement, selon un anneau de collage (13,14) sur l'âme en tôle respective des conduites de part et d'autre du joint de raccordement,
d) regarnissage des joints par application de ciment venant combler la zone (9) précédemment dégagée et d'une couche de mortier alimentaire de finition sur la partie interne du joint au contact du fluide véhiculé.

2. Procédé selon la revendication 1 **caractérisé en ce que** l'on effectue un joint collé (12) entre huit à douze joints soudés (10), de préférence entre dix joints soudés.

3. Procédé selon l'une des revendications précédentes **caractérisé en ce que** la manchette métallique (10) constituant un joint soudé est réalisée sous la forme de deux demi cintres de largeur adaptée pour englober les deux manchettes de renfort d'extrémité (5,6) des conduites considérées.

4. Procédé selon l'une dés revendications 1 ou 2, **caractérisé en ce que** la bande (12) constituant le joint collé est une bande textile éventuellement plastifiée.

5. Procédé selon la revendication 4 **caractérisé en ce que** la bande (12) constituant le joint collé est constituée d'un tissu de lin enduit de polytetrafluoroéthylène.

## Claims

1. Method of renovating pipes conveying a fluid, in particular drinking water, implemented by the end-to-end connection of reinforced concrete conduits (1, 2) comprising a core (3, 4) made from thin sheet metal and reinforcing sleeves (5, 6) at each of their ends, **characterised in that** this renovation consists of repairing the joints from the inside of the said conduits in accordance with the following steps:
a) stripping the seals between the conduits from the inside by demolishing the existing concrete as far as the sheet metal core (3, 4) of each conduit so as to bare this sheet metal core and the reinforcing sleeves on each side of the joint,
b) fitting, on the part of the conduits thus bared (9), a welded joint produced in the form of a metal sleeve (10) covering the end reinforcements (5, 6), the edges of the said sleeve then being continuously welded to the respective sheet metal core of the conduits (3, 4),
c) fitting bonded joints that are respectively interposed between a plurality of welded joints, these bonded joints taking account of expansion and being produced in the form of a band (12) of flexible impervious material bridging the joint and bonded by means of a sealing mortar, in a bonding ring (13, 14) on the respective sheet metal core of the conduits on each side of the connecting joint,
d) repointing the joints by applying cement filling in the previously cleared zone (9) and a layer of food-quality finishing mortar on the internal part of the joint in contact with the fluid being conveyed.

2. Method according to claim 1, **characterised in that** one bonded joint (12) is made between eight to twelve welded joints (10), preferably between ten welded joints.

3. Method according to one of the preceding claims, **characterised in that** the metal sleeve (10) constituting a welded joint is produced in the form of two half-curves with a width adapted to encompass the two end reinforcing sleeves (5, 6) of the conduits in question.

4. Method according to one of claims 1 or 2, **characterised in that** the band (12) constituting the bonded joint is a textile band, possibly plasticised.

5. Method according to claim 4, **characterised in that** the band (12) constituting the bonded joint is formed from a linen fabric coated with polytetrafluoroethylene.

## Patentansprüche

1. Verfahren zum Sanieren von ein Fluid, insbesondere Trinkwasser, führenden Rohrleitungen, die durch Verbinden von Rohren (1, 2) aus armiertem Beton Stoß an Stoß ausgeführt sind, welche Leitungen eine Einlage (3, 4) aus dünnem Blech und Verstärkungsmuffen (5, 6) an jedem ihrer Enden umfassen, **dadurch gekennzeichnet, dass** die Sanierung darin besteht, vom Inneren der besagten Rohrleitungen her eine Wiederherstellung der Dichtungen gemäß den folgenden Schritten auszuführen:
a) Freilegen der Dichtungen zwischen den Rohren von innen her durch Abtragen des anstehenden Betons bis zur Blecheinlage (3, 4) jeder Rohrleitung derart, dass diese Blecheinlage sowie die Verstärkungsmanschetten beidseits der Dichtung freigelegt werden,
b) Einbringen einer geschweißten Dichtung in den so freigelegten Bereich der Leitungen, die in Form einer metallischen Manschette (10) ausgeführt ist, die zur Überdeckung mit den endseitigen Verstärkungen (5, 6) gebracht wird, wobei die Ränder der besagten Manschette sodann durchgängig mit der jeweiligen Blecheinlage der Rohre (3, 4) verschweißt werden,
c) Einbringen von geklebten Dichtungen jeweils zwischen einer Folge von mehreren geschweißten Dichtungen, wobei die geklebten Dichtungen es ermöglichen, die Dehnung auszugleichen und in Gestalt eines Bandes (12) aus einem flexiblen und dichten Material ausgeführt sind, das zum Überbrücken der Fuge verwendet wird, und das mittels eines Versiegelungsmörtels entlang einem Verklebungsring (13, 14) auf die jeweilige Blecheinlage der Rohre beidseits der Verbindungsfuge geklebt wird,
d) Wiederverkleiden der Fugen durch Zuführen von Zement zum Bedecken des zuvor freigelegten Bereichs (9) und einer Schicht abschließenden Füllmörtels auf den inneren, in Kontakt mit dem durchfließenden Fluid kommenden Teil der Fuge.

2. Verfahren nach Anspruch 1, **dadurch gekennzeichnet, dass** man eine Klebedichtung (12) jeweils nach acht bis zwölf geschweißten Dichtungen (10), vorzugsweise nach jeweils zehn geschweißten Dichtungen, vorsieht.

3. Verfahren nach einem der vorstehenden Ansprüche, **dadurch gekennzeichnet, dass** die eine geschweißte Dichtung bildende metallische Manschette (10) in Gestalt von zwei Halbbögen mit einer zum Übergreifen beider Endverstärkungsmuffen (5, 6) der betrachteten Rohre ausgelegten Breite ausgeführt ist.

4. Verfahren nach Anspruch 1 oder 2, **dadurch gekennzeichnet, dass** das die geklebte Dichtung bildende Band (12) ein textiles, ggf. plastifiziertes Band ist.

5. Verfahren nach Anspruch 4, **dadurch gekennzeichnet, dass** das die geklebte Dichtung bildende Band (12) aus einem mit Polytetrafluorethylen getränkten Leinengewebe besteht.
